(19) Europäisches Patentamt
European Patent Office
Office européen des brevets

(11) **EP 4 741 074 A1**

(12) **EUROPEAN PATENT APPLICATION**
published in accordance with Art. 153(4) EPC

(43) Date of publication:
**13.05.2026 Bulletin 2026/20**

(21) Application number: **24936841.6**

(22) Date of filing: **15.10.2024**

(51) International Patent Classification (IPC):
**B09B 3/40** *(2022.01)*  **B09B 3/35** *(2022.01)*
**C08J 11/12** *(2006.01)*  **C08K 3/013** *(2018.01)*
**C08K 3/22** *(2006.01)*  **C08K 3/28** *(2006.01)*
**C08L 101/00** *(2006.01)*  **C09C 1/40** *(2006.01)*
**C09C 3/10** *(2006.01)*

(52) Cooperative Patent Classification (CPC):
**B09B 3/35; B09B 3/40; C08J 11/12; C08K 3/013;
C08K 3/22; C08K 3/28; C08L 101/00; C09C 1/40;
C09C 3/10**

(86) International application number:
**PCT/JP2024/036697**

(87) International publication number:
**WO 2025/225053 (30.10.2025 Gazette 2025/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2024 JP 2024072993**

(71) Applicant: **Fuji Polymer Industries Co., Ltd.
Nagoya-shi, Aichi 450-0002 (JP)**

(72) Inventor: **YOSHIDA, Yuji
Nagoya-shi, Aichi 463-0026 (JP)**

(74) Representative: **Dehns
10 Old Bailey
London EC4M 7NG (GB)**

(54) **METHOD FOR PRODUCING THERMALLY CONDUCTIVE FILLER AND METHOD FOR PRODUCING THERMALLY CONDUCTIVE COMPOSITION**

(57)    Provided is a method for producing a recycled thermally conductive filler from a thermally conductive scrap material containing a thermosetting resin and a thermally conductive filler, the method including: a thermal decomposition step of thermally decomposing the thermally conductive scrap material by heating the thermally conductive scrap material in a low-oxygen atmosphere with an oxygen concentration of 10 vol.% or less; and a crushing step of crushing s residue formed after the thermal decomposition, wherein in the crushing step, the residue is crushed to produce particles having a median particle size in a range from 0.1 to 300 μm. The obtained recycled thermally conductive filler is mixed with a thermosetting resin to obtain a thermally conductive resin composition. As a result, a thermally conductive filler is collected from the scrap of a thermally conductive composition that has previously been discarded, and the collected filler can be reused.

FIG. 1

## Description

Technical Field

The present invention relates to a method for producing a recycled thermally conductive filler useful for a thermally conductive composition suitable for being interposed between a heat generating portion of an electric or electronic component or the like and a heat sink, and a method for producing a thermally conductive composition.

Background Art

Thermally conductive silicone materials in which silicone is used are used as heat dissipation materials for electronic components. Conventionally, scraps generated during production and materials after use have been discarded by landfill as industrial waste without being reused from the viewpoint of ensuring quality. In particular, when a thermosetting polymer is used, the polymer and a thermally conductive filler need to be separated and reused, but an effective separation process for a heat dissipation material has not yet been put into practical use. A process has been proposed in which a polymer is thermally decomposed into monomers in a high-temperature alkaline aqueous solution, and the monomers are collected and then repolymerized, but the residue such as an inorganic reinforcing material, which remains as precipitates, are discarded. When a heat dissipation material is treated in this process, the thermally conductive filler, which will be a residue, may be reusable by cleaning the filler, but this is not practical from the viewpoint of costs and environmental impact. In recent years, there is a demand for recycling technologies suitable for heat dissipation materials in response to a growing demand for Sustainable Development Goals (SDGs).
Patent Document 1 proposes that silicone rubber is thermally decomposed, and separated into volatile siloxane and silicic acid, followed by collection. Patent Document 2 proposes catalytic pyrolysis of silicone rubber with alcohol to recycle a polymer.

Prior Art Documents

Patent Documents

[Patent Document 1] JP H5-271416A
[Patent Document 2] JP 2002-187976A

Disclosure of Invention

Problem to be Solved by the Invention

However, regarding conventional recycling methods, there have not been effective proposals for reusing thermally conductive fillers, and most of the thermally conductive fillers have been discarded by landfill. For this reason, disposal costs are currently high.
In order to solve the aforementioned problem, the present invention provides a method for producing a recycled thermally conductive filler, by which a thermally conductive filler can be collected from the scrap of a thermally conductive composition that has previously been discarded and the collected filler can be reused, and a method for producing a thermally conductive composition.

Means for Solving Problem

An embodiment according to the present invention is a method for producing a recycled thermally conductive filler from a thermally conductive scrap material containing a thermosetting resin and a thermally conductive filler, the method including a thermal decomposition step of thermally decomposing the thermally conductive scrap material by heating the thermally conductive scrap material in a low-oxygen atmosphere with an oxygen concentration of 10 vol.% or less; and a crushing step of crushing a residue formed after the thermal decomposition, wherein in the crushing step, the residue is crushed to produce particles having a median particle size in a range from 0.1 to 300 $\mu$m.
Another embodiment according to the present invention relates to a method for producing a thermally conductive resin composition, the method including: obtaining a thermally conductive resin composition by mixing, with a thermosetting resin, the recycled thermally conductive filler obtained using the method for producing a recycled thermally conductive filler.

Effects of the Invention

The present invention can provide a method for producing a recycled thermally conductive filler, the method including a thermal decomposition step of thermally decomposing a thermally conductive scrap material by heating the thermally conductive scrap material in a low-oxygen atmosphere with an oxygen concentration of 10 vol.% or less; and a crushing step of crushing a residue formed after the thermal decomposition, wherein in the crushing step, the residue is crushed into particles having a median particle size of 0.1 to 300 $\mu$m, and thus a recycled thermally conductive filler is produced using the scrap material of a thermally conductive composition that has conventionally been discarded, as a result of which, the scrap material can be reused. The present invention can also provide a method for producing a thermally conductive composition.

Brief Description of Drawings

[FIG. 1] FIG. 1 is a schematic cross-sectional view illustrating how a thermally conductive sheet according to an embodiment of the present invention is used.
[FIG. 2] FIGS. 2A to 2B are schematic diagrams illustrating a method for measuring the thermal conductivity of a sample according to an example of the present invention.
[FIG. 3] FIG. 3 is a SEM photograph (magnification of 500) of a filler of Example 1 after thermal decomposition and before crushing.
[FIG. 4] FIG. 4 is a SEM photograph (magnification of 500) of a filler of Comparative Example 1 after thermal decomposition and before crushing.

Description of the Invention

The present invention relates to production of a recycled thermally conductive filler from a thermally conductive scrap material containing a thermosetting resin and a thermally conductive filler. Examples of the thermosetting resin include silicone resin, epoxy resin, and phenolic resin. In particular, silicone resin is preferable. Examples of the thermally conductive filler are preferably inorganic particles of at least one selected from the group consisting of aluminum oxide (alumina), zinc oxide, magnesium oxide, aluminum nitride, boron nitride, aluminum hydroxide, and silicon carbide. These inorganic particles have high thermal conductivity and are suitable as TIMs (Thermal Interface Materials). In particular, alumina and/or aluminum nitride are preferable.
A method according to the present invention includes the following steps.

1. Thermal decomposition step

(1) Thermal decomposition atmosphere

A thermally conductive scrap material is thermally decomposed by heating the thermally conductive scrap material in a low-oxygen atmosphere with an oxygen concentration of 10 vol.% or less. Although the normal oxygen concentration at 0 m above sea level is about 21 vol.% and the nitrogen concentration is about 78 vol.%, in the present invention, thermal decomposition is carried out in a low-oxygen state or an oxygen-free state. The reason for this is that in the presence of oxygen, organic matter burns, leaving behind its ash. If the ash remains, it is difficult to reuse the recycled thermally conductive filler. The oxygen concentration is preferably 7 vol.% or less, the oxygen concentration is more preferably 5 vol.% or less, and even more preferably 3 vol.% or less. The low-oxygen atmosphere is preferably an inert gas flow, a gas mixture flow of 51 to 100 vol.% inert gas and 0 to 49 vol.% air, an atmosphere under a reduced pressure, or a superheated steam. When the thermally conductive scrap material is thermally decomposed by heating the thermally conductive scrap material in a low-oxygen atmosphere with an oxygen concentration of 10 vol.% or less, the amount of a residual polymer component can be reduced. The amount of the residual polymer component is preferably 15 wt.% or less, more preferably 10 wt.% or less, and even more preferably 8 wt.% or less of the polymer mass before treatment. Note that the amount of the residual polymer component is a relative amount when the polymer mass before treatment is 100%.

(2) Treatment temperature

In the thermal decomposition step, heating to a temperature of 400°C to 1600°C is preferable. Thermal decomposition is not efficient at a temperature lower than 400°C. Temperatures higher than 1600°C are not preferable because silica reacts with alumina to produce mullite. From the viewpoint of energy conservation, a temperature of 450°C to 1000°C is preferable, and a temperature of 500°C to 800°C is more preferable.

(3) Treatment time

The heating holding time is preferably 10 minutes to 10 hours, more preferably 20 minutes to 5 hours, and even more preferably 30 minutes to 3 hours, depending on the heating temperature.
In the thermal decomposition step, volatile components generated through thermal decomposition may be fractionated. Some of the volatile components may also be reusable.

2. Crushing step

The residue formed after the thermal decomposition is crushed. In the crushing step, the residue is crushed into particles having a median particle size of 0.1 to 300 $\mu$m. The crushing step is conducted using a ball mill, a pin mill, a cutter mill, a jet mill, a bead mill, a hammer mill, or an automatic mortar mixer.
It is preferable to classify particles after the crushing step in order to obtain particles with a uniform particle size. Classification can be achieved by mesh sieving, air elutriation, water elutriation, vortex classification, or the like. In particular, it is preferable to sieve particles using a metal mesh, which achieves accurate uniformity of particle size.
The atomic concentration of Si in the recycled thermally conductive filler obtained using the method for producing a recycled thermally conductive filler according to the present invention (also referred to as a "recycled filler" hereinafter) is preferably 1 at% or less, more preferably 0.5 at% or less, and even more preferably 0.1 at% or less, where the atomic concentration of Si is determined through SEM-EDX analysis (scanning electron microscope-energy dispersive X-ray spectroscopy). This makes it possible to increase the purity of the recycled thermally conductive filler of interest.
The thermally conductive scrap material contains a thermally conductive filler in an amount of preferably 100 to 4000 parts by mass, more preferably 200 to 3000 parts by mass, and even more preferably 400 to 2000 parts by mass, relative to 100 parts by mass of the thermosetting resin. When the thermally conductive filler is within the above range, a thermally conductive filler can be efficiently collected, which is effective for reuse.
RaSi(OR')$_{4-a}$ (where R represents an unsubstituted or substituted hydrocarbon group having 8 to 12 carbon atoms, R' represents an alkyl group having 1 to 4 carbon atoms, and a is 0 or 1) may be added to the recycled filler surface. Examples of the alkoxysilane compounds represented by the chemical formula (simply referred to as "silane") include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. The silane compounds may be used alone or in combination of two or more.
In particular, minute thermally conductive particles that have a volume-based median diameter D = 50 of 1 $\mu$m or less and have undergone surface pretreatment with a coupling agent in advance have an improved mixing property when the particles are formed into a compound and have improved workability, and such particles are less likely to adsorb platinum catalysts in the compounding process, and thus the curing reaction of addition reaction cure silicone is not inhibited.
In the method for producing a thermally conductive resin composition according to the present invention, the recycled thermally conductive filler obtained using the method for producing a recycled thermally conductive filler is mixed with a thermosetting resin to form a thermally conductive resin composition. The thermosetting resin is preferably a silicone polymer. Silicone polymers have high heat resistance and are suitable as thermally conductive materials: TIMs (Thermal Interface Materials). The silicone polymer is preferably, for example, an addition cure silicone polymer, a peroxide cure silicone polymer, or a condensation cure silicone polymer. These may be used alone or in combination. Commercially available silicone polymers can be used. The silicone polymer may be in the form of rubber, gel, grease, putty, liquid, or the like.
The thermally conductive resin composition contains the recycled thermally conductive filler in an amount of preferably 100 to 4000 parts by mass, more preferably 200 to 3000 parts by mass, and even more preferably 400 to 2000 parts by mass, relative to 100 parts by mass of the thermosetting resin. As a result, a thermally conductive composition with high thermal conductivity can be obtained.
The thermally conductive composition is produced, for example, by the following process.

(1) Thermally Conductive Composition

A thermosetting resin, a recycled thermally conductive filler, a curing catalyst such as platinum if necessary, as well as a pigment, an alkoxysilane compound represented by RaSi(OR')$_{4-a}$ (where R represents an unsubstituted or substituted hydrocarbon group having 8 to 12 carbon atoms, R' represents an alkyl group having 1 to 4 carbon atoms, and a is 0 or 1), and the like are mixed and stirred using a mixing device such as a planetary mixer to form a compound (composition). A liquid composition such as grease is a finished product in this state.

(2) Sheet Molding

When the compound is molded into a sheet, the compound is degassed for 1 to 10 minutes under a reduced pressure of about -0.1 Pa, as an example. Then, the compound is sandwiched between release-treated polyethylene terephthalate (PET) films, rolled using a constant speed roll to a predetermined thickness, and cured through heating at 100°C for about 10 minutes to form a thermally conductive sheet.

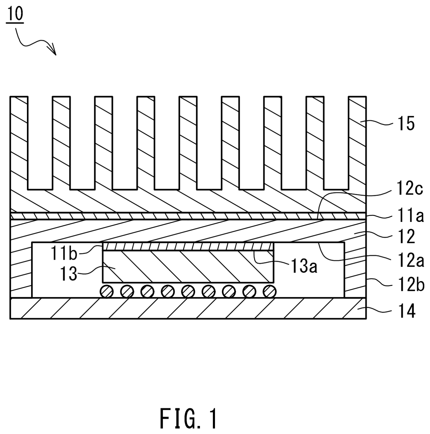

The recycled filler obtained by the present invention can be used again in a thermally conductive composition and/or a thermally conductive sheet, and is suitable as a thermally conductive filler for a heat dissipation material: TIM (Thermal Interface Material), which is interposed between a heat generating portion of an electric or electronic component or the like and a heat sink. The present invention will be described using, for example, a heat conductive sheet as the heat dissipation material. FIG. 1 is a schematic cross-sectional view of a heat dissipation structure 10 into which thermally conductive sheets according to an embodiment of the present invention are incorporated. A thermally conductive sheet 11b dissipates heat generated by an electronic component 13 such as a semiconductor element and is fixed to a main surface 12a of a heat spreader 12 facing the electronic component 13 and is sandwiched between the electronic component 13 and the heat spreader 12. A thermally conductive sheet 11a is also sandwiched between the heat spreader 12 and a heat sink 15. The thermally conductive sheets 11a and 11b, together with the heat spreader 12, constitute a heat dissipation member that dissipates heat from the electronic component 13. The heat spreader 12 is formed, for example, in a rectangular plate shape and has the main surface 12a facing the electronic component 13, and a side wall 12b protruding from the main surface 12a along an outer perimeter of the main surface 12a. The heat spreader 12 has the thermally conductive sheet 11b provided on the main surface 12a surrounded by the side wall 12b, and the heat sink 15 provided on another surface 12c opposite to the main surface 12a via the thermally conductive sheet 11a. The electronic component 13 is, for example, a semiconductor element such as a ball grid array (BGA), and is mounted on a wiring board 14.

The thermally conductive scrap material containing the thermosetting resin and the thermally conductive filler used in the present invention may be of any type, such as process scrap, waste scrap, a collected product, an expired stock article, or a prototype. The thermally conductive scrap material may be in any form, such as rubber, gel, grease, putty, or liquid.

Examples

The present invention will be described using the following examples. The present invention is not limited to these examples.

Various parameters were measured using the method described below.

<Thermal Conductivity>

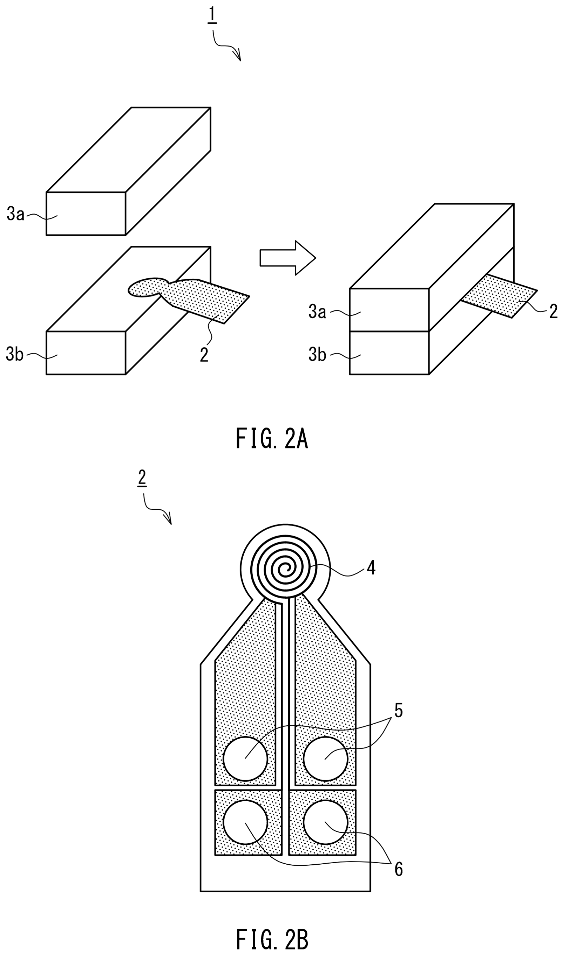

The thermal conductivity of the thermally conductive silicone rubber sheet was measured by a hot disc (conforming to ISO 22007-2:2008). As shown in FIG. 2A, with this thermal conductivity measuring device 1, a polyimide film sensor 2 was sandwiched between two samples 3a and 3b, a constant power was applied to the sensor 2 to generate a constant amount of heat, and thermal characteristics were measured from temperature increase values of the sensor 2. The sensor 2 has a leading end 4 with a diameter of 7 mm, and has electrodes having a double spiral structure as shown in FIG. 2B, an electrode 5 for applying current and an electrode 6 for resistance value (electrode for temperature measurement) being arranged at a lower portion thereof. The thermal conductivity was calculated using the following equation (Math. 1).

[Math. 1]

$$\lambda = \frac{Po \cdot D(\tau)}{\pi^{3/2} \cdot r} \cdot \frac{D(\tau)}{\Delta T(\tau)}$$

λ: Thermal conductivity (W/m·K)
Po: Constant power (W)
r: Radius of sensor (m)
τ:

$$\sqrt{\alpha \cdot t / r^2}$$

$\alpha$: Thermal diffusivity of sample (m$^2$/s)
t: Measurement time (s)
D($\tau$): Nondimensionalized function of $\tau$
$\Delta$T($\tau$): Temperature increase of sensor (K)

<SEM-EDX Analysis>

SEM-EDX analysis (scanning electron microscope-energy dispersive X-ray spectroscopy) was performed using the tabletop electron microscope TM4000 Plus II, manufactured by Hitachi High-Tech Corporation. An atomic concentration obtained as a result of the analysis represents a percentage of the number of atoms of an element relative to elements in the sample. Although the analysis range depends on the material, usually, at a magnification of 500, the analysis depth is 1 to 2 $\mu$m, and the analysis range is several micrometers to several tens of micrometers.

Example 1

(1) Process for producing thermally conductive silicone rubber sheet

Two-component room-temperature cure silicone polymer (silicone component), which is commercially available polyorganosiloxane: 100 g
Thermally conductive filler was a mixture of alumina with D50 (median diameter) = 0.3 $\mu$m in volume-based cumulative particle size distribution, alumina with D50 = 2 pm, alumina with D50 = 35 pm, and 3.nu filler with D50 = 75 pm, the mixture was alumina with average particle size D50 = 5.2 $\mu$m: total amount of alumina was 1400 g.
The above materials were mixed to form a compound, which was rolled into a sheet with a thickness of 2.0 mm, and cured through heating at 100°C for 10 minutes to form a thermally conductive silicone rubber sheet.

(2) Thermal decomposition step

The thermally conductive silicone rubber sheet was placed in an electric furnace, and the temperature was increased from room temperature (25°C) to 600°C at a temperature increase rate of 100°C/hr under a nitrogen gas flow, and the temperature was held at 600°C for 1 hour.

(3) Crushing and classification step

The residue formed after the thermal decomposition was crushed in a mortar. The crushed material was sieved through a metal mesh with a mesh size of #150.
The filler thus obtained had a D50 (median diameter) of 3.7 $\mu$m. The Si atomic concentration determined through SEM-EDX analysis (scanning electron microscope-energy dispersive X-ray spectroscopy) was 0.1 or less, indicating that a target alumina had high purity. The yield of the obtained alumina was 99 wt.%.

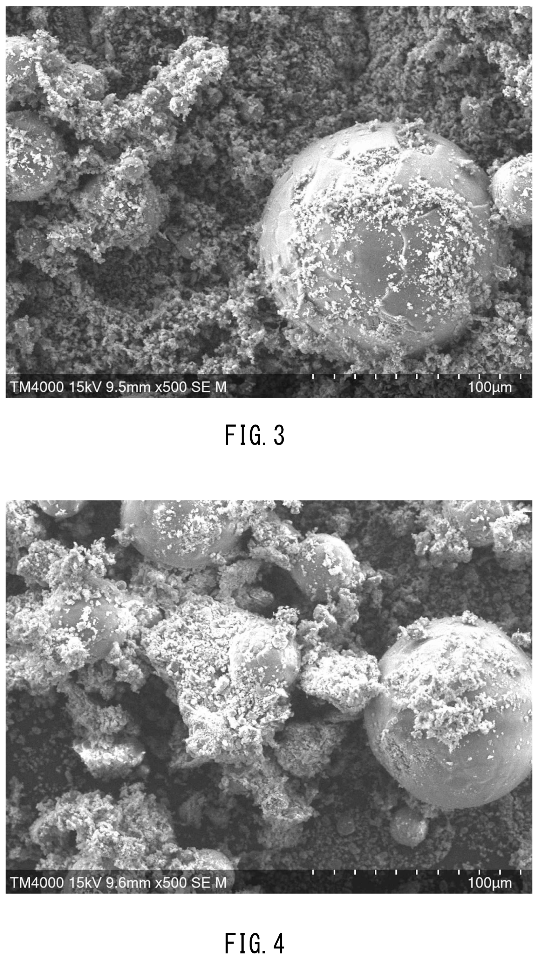

FIG. 3 is a SEM photograph of the filler of Example 1 after thermal decomposition and before crushing. The SEM-EDX analysis was performed on surfaces of large particles in FIG. 3, and the results were obtained through spot analysis of portions to which fine powder with small particle sizes did not attach.

Comparative Example 1

The same procedure as in Example 1 was conducted, except that heating was carried in the air instead of under the nitrogen gas flow in the thermal decomposition step and a heating temperature. As a result, the obtained filler had a D50 (median diameter) of 4.0 $\mu$m, which was close to the average particle size of Example 1, but the Si atomic concentration determined through SEM-EDX analysis was 1.1 wt.%, which was higher than that of Example 1. A high Si atomic concentration means that a target alumina has a low purity. The yield of the obtained alumina was 99 wt.%.
FIG. 4 is a SEM photograph of the filler of Comparative Example 1 after the thermal decomposition and before crushing.
The above results are shown in Table 1.

[Table 1]

| Filler production process | | | Ex. 1 | Comp. Ex. 1 |
|---|---|---|---|---|
| Heating step | | Atmospheric condition | Nitrogen flow | In air |
| | | Heating method | Electric furnace | Electric furnace |
| | | Temperature increase rate (°C/hr) | 100 | 100 |
| | | Heating temperature (°C) | 600 | 400 |
| | | Temperature holding time (hr) | 1 | 1 |
| Crushing step | | Crushing method | Mortar | Mortar |
| | | Mesh size | #150 | #150 |
| Filler properties | | Median diameter D50 ($\mu$m) | 3.7 | 4.0 |
| | | SEM-EDX analysis, Si atomic concentration (at%) | 0.1 or less* | 1.1 |
| Note*: The lower detection limit of SEM-EDX analysis was 0.1 to 1 at%. Although values of 0.1 at% or less were obtained, the reliability was extremely low, and thus such values were expressed as 0.1 at% or less. | | | | |

As is clear from Table 1, in Example 1, since heating was carried out in a nitrogen flow, the Si atomic concentration on the surface of the obtained alumina was low, and the purity was high, and thus the filler from Example 1 was reusable.

In contrast, in Comparative Example 1, since heating was carried out in the air, the Si atomic concentration on the alumina surface was high, and thus it was difficult to reuse Comparative Example 1.

Example 2

Two-component room-temperature cure silicone polymer (silicone component), which is commercially available polyorganosiloxane: 100 g

Recycled filler obtained in Example 1: 1400 g

The above materials were mixed to form a compound, which was rolled into a sheet with a thickness of 2.0 mm, and cured through heating at 100°C for 10 minutes to form a thermally conductive silicone rubber sheet.

Comparative Example 2

The same procedure as in Example 3 was conducted, except that 1400 g of the recycled filler obtained in Comparative Example 1 was used.

The above results are shown in Table 2.

[Table 2]

| | Ex. 2 | Comp. Ex. 2 |
|---|---|---|
| Silicone (g) | 100 | 100 |
| Recycled filler obtained in Ex. 1 (g) | 1400 | - |
| Recycled filler obtained in Comp. Ex. 1 (g) | - | 1400 |
| Thermal conductivity (W/mK) | 4.2 | 3.2 |

Example 3

The same procedure as in Example 1 was carried out, except that the nitrogen gas flow rate was 200 ml/min, the temperature was increased from room temperature (25°C) to 600°C at a temperature increase rate of 10°C/hr, and the temperature was held at 600°C for 1 hour in the thermal decomposition step. The amount of polymer remaining in the resulting combustion residue was analyzed using a thermogravimetric differential thermal analyzer (TG-DTA, TG/DTA7300 manufactured by Hitachi High-Tech Analysis Corporation).

Example 4

The same procedure as in Example 3 was conducted, except that the nitrogen gas flow rate was 180 ml/min and the air flow rate was 20 ml/min in the thermal decomposition step.

Comparative Example 3

The same procedure as in Example 3 was conducted, except that the air flow rate was 200 ml/min in the thermal decomposition step.

The above results are shown in Table 3.

[Table 3]

| | | Ex. 3 | Ex. 4 | Ex. 5 | Ex. 6 | Comp. Ex. 3 |
|---|---|---|---|---|---|---|
| Gas flow rate | Air (ml/min) | - | 20 | 40 | 80 | 200 |
| | $N_2$ (ml/min) | 200 | 180 | 160 | 120 | - |
| Temperature increase rate (°C/hr) | | 10 | 10 | 10 | 10 | 10 |
| 600°C, temperature holding time (hr) | | 1 | 1 | 1 | 1 | 1 |
| Residual polymer component (wt.%)* | | 1 or less | 1 or less | 3 | 7 | 24 |
| Alumina yield (wt.%) | | 99 | 99 | 99 | 99 | 99 |
| Note*: The amount of the residual polymer component is a relative amount when the polymer mass before treatment is 100%. | | | | | | |

The table shows the following:

(1) In Example 3, the amount of the residual polymer component was small because heating was carried out under a nitrogen flow.
(2) In Example 4, the amount of the residual polymer component was small because heating was carried out under a gas mixture of nitrogen gas and air.
(3) In Comparative Example 5, because heating was carried out under air, the amount of the residual polymer component was large, and the recycled filler could not be reused.

Industrial Applicability

A recycled filler obtained by the present invention is reusable in a thermally conductive composition and/or a thermally conductive sheet, and is suitable as a heat dissipation material: TIM (Thermal Interface Material), which is interposed between a heat generating portion of an electric or electronic component or the like and a heat sink.

Description of Reference Numerals

1          Thermal conductivity measuring device
2          Polyimide film sensor
3a, 3b    Thermally conductive sheet samples
4          Leading end of sensor
5          Electrode for applying current
6          Electrode for resistance value (electrode for temperature measurement)
10        Heat dissipation structure
11a, 11b  Thermally conductive sheet
12        Heat spreader
13        Electronic component
14        Wiring board
15        Heat sink

**Claims**

1. A method for producing a recycled thermally conductive filler from a thermally conductive scrap material containing a thermosetting resin and a thermally conductive filler, the method comprising:

   a thermal decomposition step of thermally decomposing the thermally conductive scrap material by heating the thermally conductive scrap material in a low-oxygen atmosphere with an oxygen concentration of 10 vol.% or less; and
   a crushing step of crushing a residue formed after the thermal decomposition,
   wherein in the crushing step, the residue is crushed to produce particles having a median particle size in a range from 0.1 to 300 $\mu$m.

2. The method for producing a recycled thermally conductive filler according to claim 1,
   wherein in the thermal decomposition step, the thermally conductive scrap material is heated to a temperature in a range from 400°C to 1600°C.

3. The method for producing a recycled thermally conductive filler according to claim 1 or 2,
   wherein the low-oxygen atmosphere is at least one atmosphere selected from the group consisting of an inert gas flow, a gas mixture flow of 51 to 100 vol.% inert gas and 0 to 49 vol.% air, an atmosphere under a reduced pressure, and a superheated steam.

4. The method for producing a recycled thermally conductive filler according to any one of claims 1 to 3,
   wherein the crushing step is at least one step selected from the group consisting of ball milling, pin milling, cutter milling, jet milling, bead milling, hammer milling, and griding with an automatic mortar mixer.

5. The method for producing a recycled thermally conductive filler according to any one of claims 1 to 4, further comprising
   a classification step after the crushing step.

6. The method for producing a recycled thermally conductive filler according to claim 5,
   wherein the classification step is sieving through a mesh.

7. The method for producing a recycled thermally conductive filler according to any one of claims 1 to 6,
   wherein the thermosetting resin is a silicone polymer.

8. The method for producing a recycled thermally conductive filler according to any one of claims 1 to 7,
   wherein a Si atomic concentration of the recycled thermally conductive filler is 1 at% or less, where the Si atomic concentration is determined through SEM-EDX analysis (scanning electron microscope-energy dispersive X-ray spectroscopy).

9. The method for producing a recycled thermally conductive filler according to any one of claims 1 to 8,
   wherein the recycled thermally conductive filler is at least one selected from the group consisting of alumina and aluminum nitride.

10. The method for producing a recycled thermally conductive filler according to any one of claims 1 to 9,
    wherein the thermally conductive scrap material contains the thermally conductive filler in an amount in a range from 100 to 4000 parts by mass, relative to 100 parts by mass of the thermosetting resin.

11. The method for producing a recycled thermally conductive filler according to any one of claims 1 to 10,
    wherein the thermally conductive scrap material is selected from the group consisting of process scrap, waste scrap, a collected product, an expired stock article, and a prototype.

12. The method for producing a recycled thermally conductive filler according to any one of claims 1 to 11,
    wherein the recycled thermally conductive filler is further surface-treated with $RaSi(OR')_{4-a}$ (where R represents an unsubstituted or substituted organic group having 8 to 12 carbon atoms, R' represents an alkyl group having 1 to 4 carbon atoms, and a is 0 or 1).

13. A method for producing a thermally conductive resin composition, comprising

obtaining a thermally conductive resin composition by mixing, with a thermosetting resin, the recycled thermally conductive filler obtained using the method for producing a recycled thermally conductive filler according to any one of claims 1 to 12.

14. The method for producing a thermally conductive resin composition according to claim 13, wherein the thermosetting resin is a silicone resin.

15. The method for producing a thermally conductive resin composition according to claim 13 or 14, wherein the thermally conductive resin composition contains the recycled thermally conductive filler in an amount in a range from 100 to 4000 parts by mass, relative to 100 parts by mass of the thermosetting resin.

FIG. 1

FIG. 2A

FIG. 2B

TM4000 15kV 9.5mm x500 SE M                    100µm

FIG. 3

TM4000 15kV 9.6mm x500 SE M                    100µm

FIG. 4

## INTERNATIONAL SEARCH REPORT

| International application No. |
|---|
| **PCT/JP2024/036697** |

**A.    CLASSIFICATION OF SUBJECT MATTER**

*B09B 3/40*(2022.01)i; *B09B 3/35*(2022.01)i; *C08J 11/12*(2006.01)i; *C08K 3/013*(2018.01)i; *C08K 3/22*(2006.01)i; *C08K 3/28*(2006.01)i; *C08L 101/00*(2006.01)i; *C09C 1/40*(2006.01)i; *C09C 3/10*(2006.01)i
FI:    B09B3/40; C08L101/00; C08K3/22; C08K3/28; C08K3/013; B09B3/35; C09C1/40; C09C3/10; C08J11/12

According to International Patent Classification (IPC) or to both national classification and IPC

**B.    FIELDS SEARCHED**

Minimum documentation searched (classification system followed by classification symbols)

B09B3/40; B09B3/35; C08J11/12; C08K3/013; C08K3/22; C08K3/28; C08L101/00; C09C1/40; C09C3/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 5-271416 A (WACKER-CHEMIE GMBH) 19 October 1993 (1993-10-19)<br>paragraphs [0006]-[0036] | 1-15 |
| Y | JP 52-14643 A (SHIN-ETSU CHEMICAL CO., LTD.) 03 February 1977 (1977-02-03)<br>page 2, lower right column, lines 1-11 | 1-15 |
| A | JP 2010-47639 A (HITACHI CABLE, LTD.) 04 March 2010 (2010-03-04)<br>entire text, all drawings | 1-15 |
| A | JP 2002-187976 A (NATIONAL INSTITUTE OF ADVANCED INDUSTRIAL SCIENCE AND TECHNOLOGY) 05 July 2002 (2002-07-05)<br>entire text, all drawings | 1-15 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/036697**

| Patent document cited in search report | | | Publication date (day/month/year) | Patent family member(s) | Publication date (day/month/year) |
|---|---|---|---|---|---|
| JP | 5-271416 | A | 19 October 1993 | EP 527436 A1 page 2, line 23 to page 7, line 20 DE 4126319 A1 | |
| JP | 52-14643 | A | 03 February 1977 | (Family: none) | |
| JP | 2010-47639 | A | 04 March 2010 | (Family: none) | |
| JP | 2002-187976 | A | 05 July 2002 | (Family: none) | |

Form PCT/ISA/210 (patent family annex) (July 2022)

**REFERENCES CITED IN THE DESCRIPTION**

**Patent documents cited in the description**

- JP H5271416 A

- JP 2002187976 A